# EUROPEAN PATENT SPECIFICATION

(11) **EP 1 436 946 B1**
(45) Date of publication and mention of the grant of the patent: **28.02.2007**
(21) Application number: 01978438.8
(22) Date of filing: 19.10.2001
(51) Int. Cl.: H04L 12/18, H04L 29/08

(54) **TRANSMISSION OF MULTICAST AND BROADCAST MULTIMEDIA SERVICES VIA A RADIO INTERFACE**
ÜBERTRAGUNG VON MULTICAST UND BROADCAST MULTIMEDIA DIENSTEN ÜBER EINE FUNKSCHNITTSTELLE
TRANSMISSION DE SERVICES MULTIMEDIAS PAR DIFFUSION ET MULTI-DIFFUSION VIA UNE INTERFACE RADIO

(43) Date of publication of application: 14.07.2004
(73) Proprietor: Nokia Corporation, 02150 Espoo (FI)
(72) Inventor: KOULAKIOTIS, Dimitris, Bayswater London W2 6JA (GB); SARKKINEN, Sinikka, FIN-36200 Kangasala (FI)
(74) Representative: Cohausz & Florack
(86) International application number: PCT/EP2001/012117
(87) International publication number: WO 2003/036871

(56) References cited:
- WO-A-00/62492
- WO-A-99/00938
- DEERING S: "HOST EXTENSIONS FOR IP MULTICASTING" INTERNET SPECIFICATION RFC, XX, XX, no. 1112, 1 August 1989 (1989-08-01), pages 1-17, XP002007299

## Description

### FIELD OF THE INVENTION

The invention relates to a network element for a radio access network of a cellular network supporting the transmission of multicast and broadcast multimedia services via a radio interface to user equipment, which network element comprises radio interface protocols associated to different protocol layers including a data link layer (layer 2). The invention equally relates to such a radio access network, to such a cellular network, to a corresponding user equipment, to a corresponding radio access based communication system, and to a method for providing multicast broadcast multimedia services to a user equipment.

### BACKGROUND OF THE INVENTION

Broadcast and multicast are methods for transmitting datagrams from a single source to several destinations, i.e. as point-to-multipoint transmissions. As mentioned in the technical specification 3GPP TS 22.146 V5.0.0 (2001-10):"Multimedia Broadcast/Multicast Service; Stage 1 (Release 5)", currently, two such services are specified, the cell broadcast service (CBS) and the internet protocol (IP) multicast service.

The CBS allows for low bit-rate data to be transmitted to all subscribers in a set of given cells over a shared broadcast channel. This service offers a message-based service.

The IP-Multicast service enables mobile subscribers to receive multicast traffic. This service does not allow multiple subscribers to share radio or core network resources. Thus, it does not offer any advantages as far as resource utilization within the public land mobile network (PLMN) and over the radio access network (RAN) is concerned.

The benefit of multicast and broadcast in the network is that data only has to be sent once on each link, unless a repetition of the data becomes necessary. In UMTS (universal mobile telecommunication services) networks, for example, an SGSN (serving general packet radio system support node) will send data only once to a radio network controller (RNC) regardless of the number of Node Bs and user equipment (UE) that wish to receive it.

The benefit of multicast and broadcast on the radio interface is that many users can receive the same data over a common down-link (DL) channel, thus avoiding clogging up the radio interface with multiple transmissions of the same data. Therefore, broadcast and multicast are techniques which decrease the amount of data within the network and which use resources more efficiently.

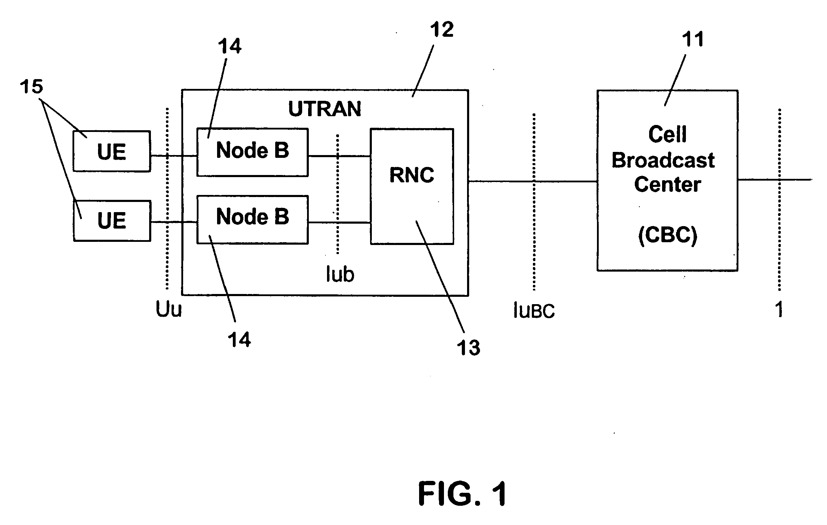

For illustration, a basic network structure presented for cell broadcast services in the technical specification 3GPP TS 23.041 V4.1.0 (2001-06): "3rd Generation Partnership Project; Technical Specification Group Terminals; Technical realization of Cell Broadcast Service (CBS) (Release 4)" for UMTS is shown in figure 1. The network comprises as part of the core network a cell broadcast center CBC 11, which is connected via an Iu-bc interface to an RNC 13 of an UTRAN (UMTS terrestrial radio access network) 12. The CBC 11 may be connected in addition to other RNCs of the same or other UTRANs. Within the UTRAN 12, the RNC 13 is connected via a Iub interface to two Node Bs 14. Each of the Node Bs 14 is further connected via the radio interface Uu to a user equipment 15.

The CBC 11 is responsible for managing cell broadcast messages and can reach every RNC 13 via the user plane of the Iu interface. Cell broadcast messages are thus distributed by the CBC 11 to each concerned RNC 13. The RNCs 13 are responsible for the control of radio resources. Accordingly, they control the transmission of received broadcast messages via the Node Bs 14 to the UEs 15.

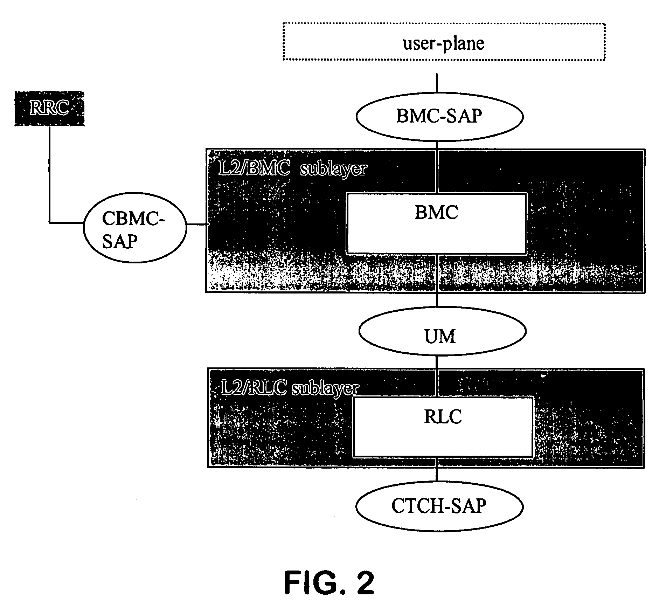

In the RNC, radio interface protocols are employed in order to be able to set up, reconfigure and release radio bearer services for transmissions like a broadcast transmission on the radio interface. The radio interface protocols are distributed to different layers, more specifically to the physical layer as layer 1, the data link layer as layer 2 and the network layer as layer 3. Figure 2, which was taken from the technical specification 25.324, illustrates the current broadcast/multicast control protocol model. The figure shows a radio link control protocol (RLC) in a first sublayer L2/RLC and a broadcast/multicast control protocol (BMC) in a second sublayer L2/BMC of the user plane of layer 2. The L2/BMC sublayer is arranged above the L2/RLC sublayer. Further sublayers of layer 2, like a sublayer for the medium access control protocol (MAC) located below the L2/RLC sublayer, are not depicted in the figure. Above the L2/BMC sublayer, a radio resource control protocol (RRC) is depicted, which belongs to the control plane of layer 3. The layers are connected to each other through Service Access Points (SAPs). The BMC is connected to the RRC by a CBMC-SAP and further in unacknowledged mode (UM) via the L2/RLC sublayer and a CTCH-SAP to the MAC sublayer. In addition, the BMC is provided with a BMC-SAP.

Broadcast and multicast services are received from the core network via the CBC, the Iu-bc interface and the BMC SAP at the L2/BMC sublayer. The BMC adapts the broadcast and multicast services originating from the broadcast domain on the radio interface. To this end, it comprises several functions, which also enable the BMC to interact with the other protocols. The defined functions are storage of cell broadcast messages, traffic volume monitoring and radio resource request for CBS, scheduling of BMC messages, transmission of BMC messages to user equipment and delivery of cell broadcast messages to upper layers (NAS: non access stratum). In accordance with these functions, respective service data and control data is forwarded in unacknowledged mode to the RLC, and further via the CTCH-SAP and the MAC to the physical layer for transmission via the radio interface to the user equipment. The L2/BMC sublayer is transparent for all services except for broadcast/multicast services.

The above mentioned technical specification 22.146 specifies requirements for a new service called Multicast Broadcast Multimedia Service (MBMS). For the MBMS, two modes of operation are provided, the broadcast mode and the multicast mode. In both modes, the MBMS is to enable unidirectional point-to-multipoint transmissions of multimedia data, like text, audio, picture, or video, from a single source point via a radio interface to a broadcast area or to a multicast group in a multicast area respectively. The transmission of such multimedia services cannot be handled with the current BMC protocol model without changes, since multimedia transmissions require different and additional functions and interactions compared to conventional cell broadcast and IP multicast messages. The realization of the MBMS over the Radio Access Network (RAN) has not been specified yet.

WO 00/62492 discloses a method for providing multicasting at an data link layer Ethernet switch by treating multicast addresses as unicast addresses, therefore eliminating the need for expensive IP decoding and routing.

### SUMMARY OF THE INVENTION

It is an object of the invention to enable the transmission of multicast and broadcast multimedia services via a radio access network of a cellular network to user equipment.

This object is reached with a network element for a radio access network of a cellular network supporting the transmission of multicast and broadcast multimedia services via a radio interface to user equipment, which network element comprises radio interface protocols associated to different protocol layers including a data link layer (layer 2). In the proposed network element, the data link layer comprises a dedicated multicast broadcast multimedia control sublayer for a multicast broadcast multimedia control protocol (MBMC). This MBMC adapts multicast and broadcast multimedia services, which originating from a core network of said cellular network, for transmission on the radio interface.

The object is equally reached with a cellular network and a radio access network for a cellular network comprising the proposed network element. The object is also reached with a radio access based communication system comprising such a cellular network, and with a user equipment comprising a multicast/ broadcast multimedia control entity enabling the handling of multicast and broadcast multimedia services received by such a cellular.network.

Further, the object is reached with a corresponding method.

The invention proceeds from the idea that instead of adapting the current BMC sublayer to be able to handle the new service, a completely new, additional sublayer could be introduced to layer 2 of the protocol stack. The proposed MBMC sublayer adapts multicast and broadcast multimedia services originating from the broadcast domain on the radio interface. Preferably, this new MBMC sublayer is used in parallel with the existing BMC sublayer.

It is an advantage of the invention, that it enables the transmission of MBMS messages.

It is further an advantages of the invention that the introduction of a new, dedicated sublayer for supporting MBMS messages enables an easier implementation than an enhancement of the currently defined BMC.

It is an additional advantage that with the invention it is not required in the case of UMTS to use the Iubc interface between the core network and UTRAN as with the currently defined BMC, i.e. the Iu-interface could be used, and therefore it is possible to use the functionalities, which are provided by such core network side network elements like SGSN, HLR (home location register), GGSN (gateway general packet radio system support node) etc., in a more flexible way.

It is still a further advantage of the invention that it enables a system that is backwards compatible with regard to user equipment using earlier releases. User equipment supporting an earlier 3GPP system release would not be able to cooperate with the new functionality of an enhanced BMC, since amendments would have to effect also the existing functionalities.

Preferred embodiments of the invention become apparent from the subclaims.

In particular, a variety of advantageous interactions with other layers are proposed, as well as variety of functions which can be provided by the protocol of the new sublayer for enabling these interactions and for enabling the adaptation of MBMS on the radio interface.

The invention can be employed in particular, though not exclusively, in a UMTS network as cellular network, in which the radio access network is a UTRAN and in which the network element is an RNC for a UTRAN.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are merely intended to conceptually illustrate the structures and procedures described herein.

### BRIEF DESCRIPTION OF THE FIGURES

In the following, the invention is explained in more detail with reference to drawings, of which
- Fig. 1: shows a conventional basic network structure for cell broadcast services;
- Fig. 2: shows a conventional BMC protocol model;
- Fig. 3: shows an embodiment of a basic network structure for MBMSC according to the invention; and
- Fig. 4: shows a MBMC protocol model for an embodiment of an RNC according to the invention.

### DETAILED DESCRIPTION OF THE INVENTION

Figures 1 and 2 have already been described in connection with the background of the invention.

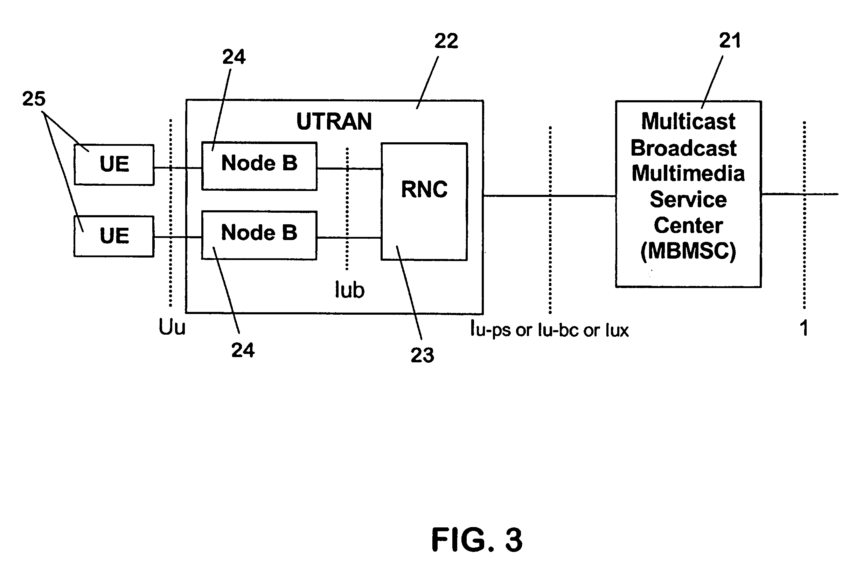

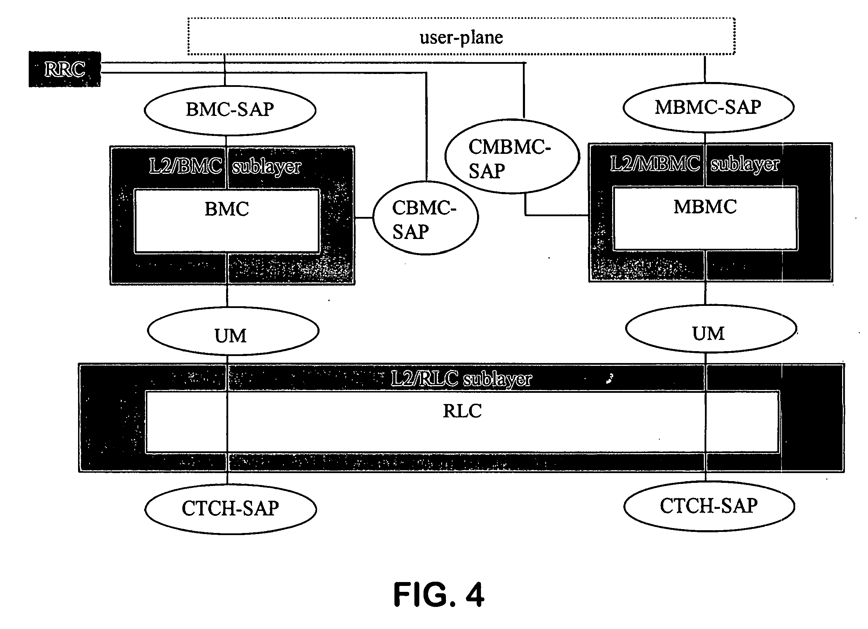

Figures 3 and 4 present an embodiment of the invention employed in an UMTS network, in which a new sublayer is introduced for MBMS in an RNC of an UTRAN.

Figure 3 presents an embodiment of a basic network structure employed for MBMS in a UMTS network according to the invention. The structure corresponds to the structure presented in figure 1, except that instead of a CBC, a multicast broadcast multimedia service center MBMSC 21 is shown. Thus, the network comprises as part of the core network an MBMSC 21, which is connected via an Iu-bc interface with an RNC 23 of an UTRAN 22. Like the CBC, the MBMSC 21 may be connected in addition to other RNCs 23. Within the UTRAN 22, the RNC 23 is connected via a Iub interface to two Node Bs 24. Each of the Node Bs 24 is further connected via the radio interface Uu to a user equipment 25. In the presented embodiment, also a Iu-ps (ps: packet switched) interface or a new Iux interface could be employed instead of a Iu-bc interface for connecting the MBMSC with the UTRAN.

Analogously to the CBC, the MBMSC 21 is responsible for managing multicast and broadcast multimedia services messages and can reach every RNC 23 via the user plane of the employed interface. Multicast and broadcast multimedia messages are thus distributed by the MBMSC 21 to each concerned RNC 23. The RNCs 23 control the transmission of received multicast and broadcast multimedia messages via the Iub interface, the Node Bs 14 and the radio interface Uu to the UEs 15.

Figure 4 shows a MBMC protocol model employed in the RNC 23 of figure 3. The MBMC protocol model comprises the same elements as the known BMC protocol model of figure 2. In addition, a further sublayer L2/MBMC with an MBMC protocol is introduced, which is integrated in the model in an analogous way as the L2/BMC sublayer. It is thus connected to the RRC by a CMBMC-SAP. Further it is connected in UM via the L2/RLC sublayer to a CTCH-SAP. Alternatively or additionally, the connection to the L2/RLC sublayer could also be in acknowledged mode (AM) and/or transparent mode (TM). Finally, it is connected to a MBMC-SAP. The two sublayers L2/BMC and L2/MBMC are arranged on the same level in the protocol stack.

The MBMC-SAP provides a broadcast/multicast transmission service in the user plane on the radio interface for common user data in unacknowledged and/or transparent mode. Alternatively or additionally, the acknowledged mode could be employed. MBMS messages and other information required for transmitting the respective service and received at the RNC 23 from the MBMSC 21 are provided to the MBMC via the MBMC-SAP. The MBMC adapts the data for transmission on the radio interface Uu. Then, it forwards the messages and further required information via the RLC, the CTCH-SAP, and the MAC to the physical layer for transmission over the radio interface Uu to the user equipment 25.

The BMC of the L2/BMC sublayer is maintained as defined by the current specifications. Conventional multicast and broadcast messages received at the RNC 23 e.g. from the CBC 11 of figure 1 are transported and processed by the BMC as explained with reference to figure 2. Thus, it the BMC is employed in parallel to the new MBMC for dealing with conventional broadcast and multicast messages, which is of particular importance for conventional terminals.

In the presented embodiment, the new L2/MBMC sublayer is able process received data and to perform different interactions with other layers, in order to enable a required adaptation of MBMS for transmission via the radio interface.

All interactions are specified in terms of primitives, which constitute a logical exchange of information and control between the L2/MBMC sublayer and higher, lower or parallel layers.

The L2/MBMC sublayer interacts for example with the RRC for establishing, modifying, and releasing links to the user equipment 25. Further, it interacts with the RRC for carrying out MBMS traffic measurements and traffic control etc.

The L2/MBMC sublayer moreover also interacts with the IuUP, which is a protocol which takes care of the data transmission on the Iu CS/PS or Iu-x interface, whichever is employed between the RNC and the MBMSC 21, or with the CBC on the user plane. With which one it interacts is dependent on the used protocol on the Iu-interface. This interaction is intended for data transmission, data related control information, flow control information and multicast session related control information. The data related control information may comprise start and/or end of session bits, sequence information, priority information etc. The multicast session related control information may comprise information on data deletion, resets etc.

Further, the L2/MBMC sublayer interacts with the RLC layer arranged below the L2/MBMC sublayer for the transmission of data, security related information, discard information etc. In addition, some kind of "wake up" message can be transmitted from this RLC layer to all user equipment 25, which is registered and therefore also authorized to receive multicast data. Such a "wake up" message an be considered to constitute some kind of paging without a response requirement.

The new sublayer also interacts with the MAC layer, which is also arranged below the new L2MBMC sublayer, for coverage and/or congestion issues. In addition, it is also possible that some part of the scheduling is located at the MAC layer e.g. when multicast data is transmitted inside a channel which is not completely dedicated for the transmission of multicast data. Also when there is a need to restrict the data amount on the radio interface, the information to reduce the multicast data rate can be given directly either to the MAC layer or the MBMC layer.

Finally, the L2/MBMC sublayer interacts with the L2/BMC sublayer. Interactions between these layers concern e.g. scheduling related information etc.

In the following, the main functions of the MBMC of the L2/MBMC sublayer proposed for the presented embodiment of the invention will be described. These functions are to enable the MBMC to perform all required processing and to perform the mentioned interactions with other protocols.

A first function provided by the MBMS protocol is a 'generation of MBMC scheduling messages'. The MBMC receives scheduling information together with each MBMS message over the interface employed between the MBMSC 21 and the RNC 23. Based on this scheduling information, the MBMC generates at the UTRAN side schedule messages, and schedules MBMS message sequences accordingly. At the user equipment side, the MBMC evaluates the scheduled messages and indicates scheduling parameters to the RRC. These parameters are then used by RRC to configure the lower layers for discontinuous receptions of MBMS messages.

A multicast or broadcast multimedia service can consist of several sessions which shall be send together. One combined multicast session can contain for example sports video clips and second news. This requires a scheduling between the different multicast sessions, which is taken care of by a second function provided by the MBMC called 'scheduling of MBMC sessions'. The transmission and evaluation of messages and scheduling information is carried out as by the function 'scheduling of MBMC messages'.

There are basically two possible ways to implement a scheduling between sessions, which will be explained based on an example for a multicast service. In this example, the multicast service comprises a sports video clips session and a news session. The sports video clips session consists of five parts 1v, 2v, 3v, 4v and 5v, and the news session consists of two part 6n and 7n. In a first alternative, each multicast session will be scheduled independently and sequentially (serially). This means that for example multicast sessions which contain video will be scheduled first and after that multicast sessions which contain news will follow. In this case, parts 1v, 2v, 3v, 4v and 5v will be sent first, and parts 6n and 7n will only be sent after all parts of the video clips session have been transmitted.

In a second alternative, the multicast sessions will be scheduled simultaneously. In this case, part of the news and sports clips sessions could be sent for instance in the following order: 1v, 6n, 2v, 7n, 3v, 4v and 5v.

Another function provided by the MBMS protocol is 'scheduling of MBMC service modes'. A scheduling decisions between the different service modes, i.e. multimedia multicast or multimedia broadcast, has to be carried out in both, the MBMSC 21 and the MBMC layer. The decisions are transmitted through the employed interface between the MBMSC 21 and the RNC 23. The MBMSC 21 is responsible for knowing how many MBMC sessions are currently going on at the UTRAN side. The required service mode scheduling on MBMC should be based on given priorities for sessions corresponding to different modes, indicated by the MBMSC 21 in each MBMSC data frame. In MBMC a session with a higher priority should always get ahead of data with a lower priority. The scheduling decision between the service modes which have the same priority should be based on the arrival of data from the MBMSC 21. How complex the scheduling algorithm for different service modes has to be is also dependent on the selected resource allocation and the channel structure for the multicast/broadcast and MBMC data services.

The data for both services that can be provided by the MBMSC 21 to the RNC 23, i.e. multicast and broadcast, are transmitted by the MBMC via the RLC and the MAC to the physical layer. The two modes of MBMS will require a prioritization due to the different nature of charging and applications that will run over them. Therefore, a further function provided by the MBMC is a 'prioritization between MBMS multicast mode messages and MBMS broadcast mode messages'.

In addition, the two layer 2 sub-layers L2/BMC and L2/MBMC will require a function that co-ordinates the two different enabled services, in particular for scheduling and prioritizing MBMS and CBS messages in a harmonized way. Thus, an interaction is needed with the BMC on how data is forwarded to the RLC etc. A corresponding function 'scheduling/ prioritization between MBMS and CBS message' is equally provided by the MBMS protocol.

Moreover, the MBMC provides a function 'storage of MBM messages' for storing MBMS messages. This function takes care more specifically of storing MBM messages received over the interface employed between the MBMSC 21 and the RNC 23 until a scheduled transmissions.

With the aid of yet another function 'data discard', the MBMC can discard such multicast related data, which has been considered to be invalid.

An additional function 'traffic volume monitoring and radio resource request for MBMS' is provided by the MBMC for periodically predicting the expected amount of MBMS traffic volume in kbps that is currently needed for the transmission of MBM messages. The function further indicates the expected amount of MBMS traffic to the RRC. Thus, this MBMC function determines at the UTRAN side the required transmission rate for a multicast or broadcast multimedia service based on the messages received over the interface employed between the MBMSC 21 and the RNC 23. Based on this calculation, the function then requests appropriate logical channel and transport channel resources from the RRC. Transport channels that could be the used are DSCH (Downlink Shared Channel) and/or FACH (Forward Access Channel) and/or the HS-DSCH (High Speed-Downlink Shared Channel) of HSDPA (High Speed Downlink Packet Access). Any suitable algorithm which is adapted to the respectively employed algorithm for transmitting MBM messages can be implemented for predicting the amount of MBMS traffic. The algorithm can also include the option that some parameters used in the prediction can be set or changed by the operator of the network.

The traffic monitoring can also have an impact on the Iu-interface in a form of flow control between the MBMC and a peer entity at the core network side. Such a peer entity can be either SGSN, or CBC, but also some other network element, like a new multicast related network element.

A further function is provided by the MBMC for the 'transmission of MBMC messages to UE'. This function transmits the MBMC messages, i.e. equally scheduling and multicast or broadcast multimedia messages, to the user equipment 25 according to a determined schedule. The transmission follows again the protocol stack, thus the transmission takes place first from the MBMC to the RLC, then to the MAC and finally to the physical layer.

A 'charging information support' function interacts with the RLC, in case the latter operates in AM, in order to enable a charging based on the amount of data transmitted to a user equipment 25. This function is used to this end for collecting user equipment information regarding the amount of data, i.e. packets, received by a user equipment 25, based on the amount of acknowledged PDUs. The collected information can then be sent via the interface employed between the RNC 23 and the MBMSC 21 to the core network. The collected information can be transmitted in particular to a corresponding MBMS charging entity in the core network, which charges the user according to the received data.

For MBMC data transmissions supporting a MBMC PDU (protocol data unit) repetition, a further function called 'retransmission/ repetition' provided by the MBMC performs the retransmission of data. This means that for instance no RLC level retransmission is introduced and that the UM RLC mode is used.

Moreover, the L2/MBMC sublayer must be aware of multicast related groups on that level so that it can submit multicast data to the correct cells under one RNC 23. This is taken care of by a 'multicast group handling' function provided by the MBMC.

Finally, a function is provided by the MBMC for identifying MBMS sessions and for initializing links between the MBMSC 21 and the MBMC protocol sublayer L2/MBMC of RNC 23. This function is called 'identification of MBMS session and initialization of link between MBMSC and L2/MBMC'. Once the MBMSC 21 has received content from the core network, a message has to be sent to the L2/MBMC sublayer via the interface between the MBMSC 21 and the RNC 23 in order to initiate the session and to provide the session details.

Also on the side of the user equipment 25, a MBMC entity is provided, in order to enable the user equipment 25 to handle multicast/broadcast multimedia services. The MBMC entity of the user equipment 25 comprises a function delivery of MBM messages to upper layer (NAS)'. This functions delivers the multicast or broadcast multimedia messages received from the core network via the interface provided between the MBMSC 21 and the RNC 23 to upper layers (NAS) in the respective user equipment 25. In a possible approach, only non-corrupted MBM messages are delivered. It is also possible, however, that even though the data packet is corrupted the codec supported by application layer may be capable of using these erroneous packets as well. In this case, also corrupted MBM messages should be delivered.

The MBMC entity of the user equipment 25 may further include a function for determining the amount of MBM data received for charging purposes. The determined amount of data is then forwarded via the radio interface Uu to the cellular network.

It is to be noted, that this set of functions can be amended in any required or desired way. Moreover, functions that turn out not to be required can be omitted, and additional desired functions can be added.

## Claims

1. Network element (23) for a radio access network (22) of a cellular network supporting the transmission of multicast and broadcast multimedia services via a radio interface (Uu) to user equipment (25), which network element (23) comprises radio interface protocols associated to different protocol layers including a data link layer (layer 2), **characterized in that** said data link layer comprises a dedicated multicast broadcast multimedia control sublayer (L2/MBMC) for a multicast broadcast multimedia control protocol, MBMC (MBMC), which MBMC adapts multicast and broadcast multimedia services, originating from a core network of said cellular network, for transmission on said radio interface (Uu).

2. Network element (23) according to claim 1, wherein said dedicated multicast broadcast multimedia control sublayer (L2/MBMC) is transparent for other services than multicast and broadcast multimedia services.

3. Network element (23) according to one of the preceding claims, comprising a radio resource control protocol (RRC) in a network layer (layer 3) situated above said data layer comprising said MBMC, wherein said MBMC interacts with said radio resource control protocol for at least one of the following:
- establishment of links to user equipment (25) via said radio interface (Uu) for the transmission of MBM data;
- modifications of links to user equipment (25) established for the transmission of MBM data via said radio interface (Uu);
- releases of links to user equipment (25) established for the transmission of MBM data via said radio interface (Uu);
- traffic control of MBM data that is to be transmitted via said radio interface (Uu); and
- measurements of the traffic amount of MBM data that is to be transmitted via said radio interface (Uu) in at least one direction.

4. Network element (23) according to one of the preceding claims, wherein said MBMC interacts with an Iu-UP (user plane) interface or a cell broadcast center (11) on a user plane for at least one of the following:
- transmission of MBM data via said radio interface (Uu) on a link established to user equipment (25);
- transmission of MBM data related control information via said radio interface (Uu) on a link established to user equipment (25);
- flow control for transmissions of MBM data via said radio interface (Uu) on a link established to user equipment (25); and
- multicast session related control for the transmission of MBM data via said radio interface (Uu) on a link to user equipment (25).

5. Network element (23) according to one of the preceding claims, wherein said MBMC interacts with a radio link control sublayer (L2/RLC) located below said dedicated sublayer (L2/MBMC) for said MBMC for at least one of the following:
- transmission of MBM data via said radio interface (Uu) on a link established to user equipment (25);
- transmission of MBM security related information via said radio interface (Uu) on a link established to user equipment (25);
- discard MBM information that was destined to be transmitted to user equipment (25); and
- transmission of a wake up message via said radio interface (Uu) on a link established to user equipment (25);

6. Network element (23) according to one of the preceding claims, wherein said MBMC interacts with a medium access control layer of said data link layer located below said dedicated sublayer (L2/MBMC) for at least one of the following:
- dealing with at least coverage and/or congestion issues;
- scheduling at least some specific kind of data; and
- reduction of the multicast data rate if required.

7. Network element (23) according to one of the preceding claims, wherein said MBMC interacts with a broadcast/multicast control layer (L2/BMC), in particular for an exchange of scheduling related information.

8. Network element (23) according to one of the preceding claims, wherein any interaction of said dedicated sublayer (L2/MBMC) for said MBMC with other protocol layers (RRC, L2/RLC) is specified in terms of a primitive.

9. Network element (23) according to one of the preceding claims, wherein said MBMC comprises a function for scheduling messages that are to be transmitted.

10. Network element (23) according to one of the preceding claims, wherein said MBMC comprises a function for scheduling all sessions belonging to a single MBM service.

11. Network element (23) according to one of the preceding claims, wherein said MBMC comprises a function performing a scheduling decision between different MBMC service modes, i.e. multimedia multicast or multimedia broadcast.

12. Network element (23) according to one of the preceding claims, wherein said MBMC comprises a function for prioritizing between MBMS multicast mode messages and MBMS broadcast mode messages.

13. Network element (23) according to one of the preceding claims, comprising a further dedicated sublayer (L2/BMC) for a broadcast/multicast control protocol (BMC) adapting non-multimedia broadcast/multicast services received from said core network for transmissions on said radio interface (Uu), wherein said MBMC comprises a function for coordinating non-multimedia broadcast/multicast services and multicast/broadcast multimedia services.

14. Network element (23) according to one of the preceding claims, wherein said MBMC comprises a function for storing MBM messages.

15. Network element (23) according to one of the preceding claims, wherein said MBMC comprises a function for discarding selected data.

16. Network element (23) according to one of the preceding claims, wherein said MBMC comprises a function for predicting an expected amount of a traffic volume that is currently needed for the transmission of MBM messages, and for requesting appropriate radio resources for a transmission of said traffic via said radio interface (Uu), and/or for performing an appropriate flow control between said MBMC and a peer entity at the core network side of said cellular network.

17. Network element (23) according to one of the preceding claims, wherein said MBMC comprises a function for transmitting MBMC messages, including scheduling information and MBM messages, via said radio interface (Uu) to user equipment (25).

18. Network element (23) according to one of the preceding claims, wherein said MBMC comprises a function for collecting information on the amount of data received by a user equipment (25) and for forwarding said information to a network entity of said cellular network charging said user equipment (25) according to a determined amount of received data.

19. Network element (23) according to one of the preceding claims, wherein said MBMC comprises a function for repeating a transmission.

20. Network element (23) according to one of the preceding claims, wherein said MBMC comprises a function for handling the submission of multicast data to selected cells.

21. Network element (23) according to one of the preceding claims, wherein said MBMC comprises a function for identifying a MBMS session and for initializing a link to a multicast broadcast multimedia service center (MBMSC, 21) providing MBMS messages, to which MBMSC (21) said network element (23) is connected via an interface (Iu-bc,Iu-ps,Iux).

22. Network element (23) according to one of the preceding claims, wherein said network element (23) is an RNC (radio network controller) for an UTRAN (UMTS terrestrial radio access network) of a UMTS (universal mobile telecommunication services) network.

23. Radio access network (22) for a cellular network comprising at least one network element (23) according to one of the preceding claims.

24. Radio access network (22) according to claim 23, wherein said radio access network (22) is an UTRAN (UMTS terrestrial radio access network) for a UMTS (universal mobile telecommunication services) network comprising at least one RNC (radio network controller) as at least one network element (23) according to one of claims 1 to 22.

25. Cellular network comprising a multicast broadcast multimedia service center (MBMSC, 21) connected via an interface (Iu-bc,Iu-ps,Iux) to at least one network element (23) according to one of claims 1 to 22.

26. Cellular network according to claim 25, wherein said cellular network is a UMTS (universal mobile telecommunication services) network, comprising at least one RNC (radio network controller) as at least one network element (23) according to one of claims 1 to 22.

27. Cellular network according to claim 26, wherein said interface is one of an Iu-ps, Iu-bc or Iux interface.

28. User equipment (25) comprising a multicast/broadcast multimedia control entity for handling multicast and broadcast multimedia services received via a radio interface (Uu) from a cellular network according to one of claims 25 to 27.

29. User equipment (25) according to claim 28, wherein said multicast/broadcast multimedia control entity includes a function for delivering received MBM messages of a multicast and broadcast multimedia service to an upper layer in said user equipment (25).

30. User equipment (25) according to claim 28 or 29, wherein said multicast/broadcast multimedia control entity includes a function for determining the amount of MBM data received and for forwarding said information via said radio interface (Uu) to said cellular network.

31. Radio access based communications system comprising a cellular network according to one of claims 25 to 27.

32. Radio access based communications system according to claim 29, comprising at least one user equipment (25) according to one of claims 28 to 30.

33. Method for providing multicast broadcast multimedia services from a cellular network via a radio interface (Uu) to user equipment (25), which cellular network comprises a radio access network (22) with a network element (23), which network element (23) comprises radio interface protocols associated to different protocol layers including a data link layer (layer 2), **characterized in that** said method comprising adapting multicast and broadcast multimedia services, originating from a core network of said cellular network, for a transmission on said radio interface (Uu) by a multicast broadcast multimedia control protocol, MBMC (MBMC) of a dedicated multicast broadcast multimedia control sublayer (L2/MBMC), which dedicated sublayer (L2/MBMC) is a sublayer of said data link layer (layer 2) of said network element (23).

## Patentansprüche

1. Netzwerkelement (23) für ein Funkzugangsnetzwerk (22) eines Mobilfunknetzwerks, welches die Übertragung von Multicast- und von Broadcast-Multimedia-Diensten über eine Funkschnittstelle (Uu) zu einem Nutzergerät (25) unterstützt, wobei das Netzwerkelement (23) Funkschnittstellenprotokolle umfasst, die verschiedenen Protokollschichten zugeordnet sind, einschließlich einer Datenverbindungsschicht (Schicht 2), **dadurch gekennzeichnet, dass** die besagte Datenverbindungsschicht eine dedizierte Multicast-Broadcast-Multimedia-Steuerungsteilschicht (L2/MBMC) für ein Multicast-Broadcast-Multimedia-Steuerungsprotokoll, MBMC (MBMC) umfasst, wobei das MBMC Multicast- und Broadcast-Multimedia-Dienste, die einem Kernnetzwerk des besagten Mobilfunknetzwerks entstammen, für Übertragungen auf der besagten Funkschnittstelle (Uu) anpasst.

2. Netzwerkelement (23) nach Anspruch 1, wobei die besagte dedizierte Multicast-Broadcast-Multimedia-Steuerungsteilschicht (L2/MBMC) für andere Dienste als die Multicast- und Broadcast-Multimedia-Dienste transparent ist.

3. Netzwerkelement (23) nach einem der vorhergehenden Ansprüche, das ein Funkressourcensteuerungsprotokoll (RRC = Radio Resource Control) in einer Netzwerkschicht (Schicht 3) umfasst, die über der besagten Datenschicht liegt, die das besagte MBMC umfasst, wobei die besagte MBMC mit dem besagten Funkressourcensteuerungsprotokoll für zumindest eine der folgenden Funktionen interagiert:
- Einrichtung von Links zu dem Nutzergerät (25) über die besagte Funkschnittstelle (Uu) für die Übertragung der MBM-Daten;
- Modifizierungen von Links zu dem Nutzergerät (25), die für die Übertragung von MBM-Daten über die besagte Funkschnittstelle (Uu) eingerichtet sind;
- Freigeben von Links zu dem Nutzergerät (25), die für die Übertragung von MBM-Daten über die besagte Funkschnittstelle (Uu) eingerichtet sind;
- verkehrssteuerung von MBM-Daten, die über die besagte Funkschnittstelle (Uu) übertragen werden sollen; und
- Messungen des Verkehrsaufkommens von MBM-Daten, die über die besagte Funkschnittstelle (Uu) übertragen werden sollen, zumindest in einer Richtung.

4. Netzwerkelement (23) nach einem der vorhergehenden Ansprüche, wobei das besagte MBMC mit einer Iu-UP (User plane = Teilnehmerebene) Schnittstelle oder mit einem Broadcastcenter (11) auf einer Teilnehmerebene für zumindest eine der folgenden Funktionen interagiert:
- Übertragung von MBM-Daten über die besagte Funkschnittstelle (Uu) auf einem Link, der zu dem Nutzergerät (25) eingerichtet ist;
- Übertragung von MBM-Daten-bezogenen Steuerungsinformationen über die besagte Funkschnittstelle (Uu) auf einem Link, der zu dem Nutzergerät (25) eingerichtet ist;
- Flusskontrolle von Übertragungen von MBM-Daten über die besagte Funkschnittstelle (Uu) auf einem Link, der zu dem Nutzergerät (25) eingerichtet ist; und
- Multicast-Sitzungs-bezogene Steuerung für die Übertragung von MBM-Daten über die besagte Funkschnittstelle (Uu) auf einem Link zu dem Nutzergerät (25).

5. Netzwerkelement (23) nach einem der vorhergehenden Ansprüche, wobei das besagte MBMC mit einer Funkverbindungssteuerungsteilschicht (L2/RLC), die unter der besagten dedizierten Teilschicht (L2/MBMC) für das besagte MBMC positioniert ist, für zumindest eine der folgenden Funktionen interagiert:
- Übertragung von MBM-Daten über die besagte Funkschnittstelle (Uu) auf einem Link, der zu dem Nutzergerät (25) eingerichtet ist;
- Übertragung von MBM-Sicherheits-bezogenen Informationen über die besagte Funkschnittstelle (Uu) auf einem Link, der zu dem Nutzergerät (25) eingerichtet ist;
- Verwerfen von MBM-Informationen, die dazu bestimmt waren, an das Nutzergerät (25) übertragen zu werden; und
- Übertragung einer Wake-up-Message über die besagte Funkschnittstelle (Uu) auf einem Link, der zu dem Nutzergerät (25) eingerichtet ist.

6. Netzwerkelement (23) nach einem der vorhergehenden Ansprüche, wobei das besagte MBMC mit einer Mediumzugangssteuerungsschicht der besagten Datenverbindungsschicht, die unter der besagten dedizierten Teilschicht (L2/MBMC) positioniert ist, für zumindest eine der folgenden Funktionen interagiert:
- Behandlung zumindest von Angelegenheiten der Abdeckung und/oder des Staus;
- Zeitliche Steuerung von zumindest irgendeiner spezifischen Datenart; und
- Reduzierung der Multicast-Datenrate, falls erforderlich.

7. Netzwerkelement (23) nach einem der vorhergehenden Ansprüche, wobei das besagte MBMC mit einer Broadcast/Multicast-Steuerungsschicht (L2/BMC) interagiert, insbesondere für einen Austausch von Informationen, die die zeitliche Steuerung betreffen.

8. Netzwerkelement (23) nach einem der vorhergehenden Ansprüche, wobei jede Interaktion der besagten dedizierten Teilschicht (L2/MBMC) für das besagte MBMC mit anderen Protokollschichten (RRC, L2/RLC) in Form einer Primitiven spezifiziert wird.

9. Netzwerkelement (23) nach einem der vorhergehenden Ansprüche, wobei das besagte MBMC eine Funktion zur zeitlichen Steuerung von Nachrichten, die übertragen werden sollen, umfasst.

10. Netzwerkelement (23) nach einem der vorhergehenden Ansprüche, wobei das besagte MBMC eine Funktion zur zeitlichen Steuerung von allen Sitzungen, die zu einem einzelnen MBM-Dienst gehören, umfasst

11. Netzwerkelement (23) nach einem der vorhergehenden Ansprüche, wobei das besagte MBMC eine Funktion umfasst, welche eine Entscheidung zur zeitlichen Steuerung zwischen unterschiedlichen MBMC-Dienst-Modi erbringt, d.h. zwischen Multimedia-Multicast oder Multimedia-Broadcast.

12. Netzwerkelement (23) nach einem der vorhergehenden Ansprüche, wobei das besagte MBMC eine Funktion zur Priorisierung zwischen MBMS-Multicast-Modus-Nachrichten und MBMS-Broadcast-Modus-Nachrichten umfasst.

13. Netzwerkelement (23) nach einem der vorhergehenden Ansprüche, das eine weitere dedizierte Teilschicht (L2/BMC) für ein Broadcast/Multicast-Steuerungsprotokoll (BMC) umfasst, das Nicht-Multimedia-Broadcast/Multicast-Dienste, die von dem besagten Kernnetzwerk empfangen werden, für Übertragungen auf der besagten Funkschnittstelle (Uu) anpasst, wobei das besagte MBMC eine Funktion zur Koordination von Nicht-Multimedia-Broadcast/Multicast-Diensten und Multicast/Broadcast-Multimedia-Diensten umfasst.

14. Netzwerkelement (23) nach einem der vorhergehenden Ansprüche, wobei das besagte MBMC eine Funktion zur Speicherung von MBM-Nachrichten umfasst.

15. Netzwerkelement (23) nach einem der vorhergehenden Ansprüche, wobei das besagte MBMC eine Funktion zum Verwerfen von ausgewählten Daten umfasst.

16. Netzwerkelement (23) nach einem der vorhergehenden Ansprüche, wobei das besagte MBMC eine Funktion zur Vorhersage eines erwarteten Verkehrsaufkommens, das für die Übertragung von MBM-Nachrichten gegenwärtig benötigt wird, und zur Anforderung von geeigneten Funkressourcen für die Übertragung des besagten Verkehrs über die besagte Funkschnittstelle (Uu), und/oder zur Erbringung einer geeigneten Flusskontrolle zwischen dem besagten MBMC und einer gleichrangigen Einheit auf der Kernnetzwerkseite des besagten Mobilfunknetzwerks, umfasst.

17. Netzwerkelement (23) nach einem der vorhergehenden Ansprüche, wobei das besagte MBMC eine Funktion zur Übertragung von MBMC-Nachrichten, einschließlich der zeitlichen Steuerung von Informationen und von MBM-Nachrichten, über die besagte Funkschnittstelle (Uu) zu dem Nutzergerät (25) umfasst.

18. Netzwerkelement (23) nach einem der vorhergehenden Ansprüche, wobei das besagte MBMC eine Funktion zur Sammlung von Informationen über das Aufkommen von Daten, die von einem Nutzergerät (25) empfangen werden, und zur Weiterleitung der besagten Informationen zu einer Netzwerkeinheit des besagten Mobilfunknetzwerks, umfasst, das dem besagten Nutzergerät (25) gemäß einem bestimmten Aufkommen an empfangenen Daten Gebühren berechnet.

19. Netzwerkelement (23) nach einem der vorhergehenden Ansprüche, wobei das besagte MBMC eine Funktion zur Wiederholung einer Übertragung umfasst.

20. Netzwerkelement (23) nach einem der vorhergehenden Ansprüche, wobei das besagte MBMC eine Funktion zur Abwicklung der Submission von Multicast-Daten zu ausgewählten Zellen umfasst.

21. Netzwerkelement (23) nach einem der vorhergehenden Ansprüche, wobei das besagte MBMC eine Funktion zur Identifizierung einer MBMS-Sitzung und zur Initialisierung eines Links zu einem Multicast-Broadcast-Multimedia-Servicecenter (MBMSC, 21), das MBMS-Nachrichten liefert, umfasst, wobei das besagte Netzwerkelement (23) mit dem MBMSC (21) über eine Schnittstelle (Iu-bc, Iu-ps, Iux) verbunden ist.

22. Netzwerkelement (23) nach einem der vorhergehenden Ansprüche, wobei das besagte Netzwerkelement (23) ein RNC (Radio Network Controller) für ein UTRAN (UMTS Terrestrial Radio Access Network) eines UMTS- (Universal Mobile Telecommunication Services) Netzwerks ist.

23. Funkzugangsnetzwerk (22) für ein Mobilfunknetzwerk, das zumindest ein Netzwerkelement (23) nach einem der vorhergehenden Ansprüche umfasst.

24. Funkzugangsnetzwerk (22) nach Anspruch 23, wobei das besagte Funkzugangsnetzwerk (22) ein UTRAN (UMTS Terrestrial Radio Access Network) für ein UMTS- (Universal Mobile Telecommunication Services) Netzwerk ist, das zumindest einen RNC (Radio Network Controller) als zumindest ein Netzwerkelement (23) nach einem der Ansprüche 1 bis 22 umfasst.

25. Mobilfunknetzwerk, das ein Multicast-Broadcast-Multimedia-Servicecenter (MBMSC, 21) umfasst, das über eine Schnittstelle (Iu-bc, Iu-ps, Iux) mit zumindest einem Netzwerkelement (23) nach einem der Ansprüche 1 bis 22 verbunden ist.

26. Mobilfunknetzwerk nach Anspruch 25, wobei das besagte Mobilfunknetzwerk ein UMTS- (Universal Mobile Telecommunication Services) Netzwerk ist, das zumindest einen RNC (Radio Network Controller) als zumindest ein Netzwerkelement (23) nach einem der Ansprüche 1 bis 22 umfasst.

27. Mobilfunknetzwerk nach Anspruch 26, wobei die besagte Schnittstelle eine Iu-ps, eine Iu-bc- oder eine Iux-Schnittstelle ist.

28. Nutzergerät (25), das eine Multicast/Broadcast-Multimedia-Steuerungseinheit zur Abwicklung von Multicast- und Broadcast-Multimedia-Diensten umfasst, die über eine Funkschnittstelle (Uu) von einem Mobilfunknetzwerk nach einem der Ansprüche 25 bis 27 empfangen werden.

29. Nutzergerät (25) nach Anspruch 28, wobei die besagte Multicast/Broadcast-Multimedia-Steuerungseinheit eine Funktion zur Lieferung der empfangenen MBM-Nachrichten eines Multicast- und Broadcast-Multimedia-Dienstes zu einer oberen Schicht in dem besagten Nutzergerät (25) umfasst.

30. Nutzergerät (25) nach Anspruch 28 oder 29, wobei die besagte Multicast/Broadcast-Multimedia-Steuerungseinheit eine Funktion zur Bestimmung des Aufkommens an empfangenen MBM-Daten, und zur Weiterleitung dieser Informationen über die besagte Funkschnittstelle (Uu) zu dem besagten Mobilfunknetzwerk umfasst.

31. Funkzugangsbasiertes Kommunikationssystem, das ein Mobilfunknetzwerk nach einem der Ansprüche 25 bis 27 umfasst.

32. Funkzugangsbasiertes Kommunikationssystem nach Anspruch 29, das zumindest ein Nutzergerät (25) nach einem der Ansprüche 28 bis 30 umfasst.

33. Verfahren zur Zur-Verfügung-Stellung von Multicast-Broadcast-Multimedia-Diensten von einem Mobilfunknetzwerk über eine Funkschnittstelle (Uu) zu einem Nutzergerät (25), wobei das Mobilfunknetzwerk ein Funkzugangsnetzwerk (22) mit einem Netzwerkelement (23) umfasst, wobei das Netzwerkelement (23) Funkschnittstellenprotokolle umfasst, die verschiedenen Protokollschichten zugeordnet sind, einschließlich einer Datenverbindungsschicht (Schicht 2), **dadurch gekennzeichnet, dass** das besagte Verfahren die Anpassung von Multicast- und Broadcast-Multimedia-Diensten, die einem Kernnetzwerk des besagten Mobilfunknetzwerks entstammen, für Übertragungen auf der besagten Funkschnittstelle (Uu) umfasst, durch ein Multicast-Broadcast-Multimedia-Steuerungsprotokoll, MBMC (MBMC) einer dedizierten Multicast-Broadcast-Multimedia-Steuerungsteilschicht (L2/MBMC), wobei die dedizierte Teilschicht (L2/MBMC) eine Teilschicht der besagten Datenverbindungsschicht (Schicht 2) des besagten Netzwerkelements (23) ist.

## Revendications

1. Élément de réseau (23) pour un réseau d'accès sans fil (22) d'un réseau de téléphonie mobile prenant en charge la transmission de services multimédia par diffusion et multidiffusion via une interface radio (Uu) vers un équipement utilisateur (25), lequel élément de réseau (23) comprend des protocoles d'interface radio associés à différentes couches de protocole comprenant une couche de liaison de données (couche 2), **caractérisé en ce que** ladite couche de liaison de données comprend une sous-couche de commande multimédia par diffusion et multidiffusion spécialisée (L2/MBMC) pour un protocole de commande multimédia par diffusion et multidiffusion MBMC (MBMC), laquelle MBMC adapte les services multimédias par diffusion et multidiffusion, issus d'un réseau fédérateur dudit réseau de téléphonie mobile, pour une transmission sur ladite interface radio (Uu).

2. Élément de réseau (23) selon la revendication 1, dans lequel ladite sous-couche de commande multimédia par diffusion et multidiffusion spécialisée (L2/MBMC) est transparente pour les services autres que les services multimédia par diffusion et multidiffusion.

3. Élément de réseau (23) selon l'une quelconque des revendications précédentes, comprenant un protocole de commande de ressources radio (RRC) dans une couche de réseau (couche 3) située au-dessus de ladite couche de données comprenant ladite MBMC, dans lequel ladite MBMC interagit avec ledit protocole de commande de ressources radio pour au moins l'une des opérations suivantes :
- l'établissement de liaisons vers l'équipement utilisateur (25) via ladite interface radio (Uu) pour la transmission des données MBM ;
- les modifications des liaisons vers l'équipement utilisateur (25) établies pour la transmission des données MBM via ladite interface radio (Uu) ;
- la libération des liaisons vers l'équipement utilisateur (25) établies pour la transmission des données MBM via ladite interface radio (Uu) ;
- le contrôle de trafic des données MBM à transmettre via ladite interface radio ; et
- les mesures de la quantité de trafic de données MBM à transmettre via ladite interface radio (Uu) dans au moins une direction.

4. Élément de réseau (23) selon l'une des revendications précédentes, dans lequel ladite MBMC interagit avec une interface lu-UP (plan utilisateur) ou un centre de diffusion cellulaire (11) sur un plan utilisateur pour au moins l'une des opérations suivantes :
- une transmission des données MBM via ladite interface radio (Uu) sur une liaison établie vers un équipement utilisateur (25);
- une transmission des données MBM liées à des informations de commande via ladite interface radio (Uu) sur une liaison établie vers un équipement utilisateur (25) ;
- un contrôle de flux pour des transmissions de données MBM via ladite interface radio (Uu) sur une liaison établie vers un équipement utilisateur (25); et
- un contrôle lié à une session multidiffusion pour la transmission de données MBM via ladite interface radio (Uu) sur une liaison vers un équipement utilisateur (25).

5. Élément de réseau (23) selon l'une des revendications précédentes, dans lequel ladite MBMC interagit avec une sous-couche de commande de liaison radio (L2/RLC) localisée sous ladite sous-couche spécialisée (L2/MBMC) pour ladite MBMC pour au moins l'une des opérations suivantes :
- une transmission des données MBM via ladite interface radio (Uu) sur une liaison établie vers un équipement utilisateur (25) ;
- une transmission des informations liées à la sécurité MBM via ladite interface radio (Uu) sur une liaison établie vers un équipement utilisateur (25);
- une suppression des informations MBM destinées à être transmises à un équipement utilisateur (25) ; et
- une transmission d'un message de sonnerie via ladite interface radio (Uu) sur une liaison établie vers un équipement utilisateur (25).

6. Élément de réseau (23) selon l'une des revendications précédentes, dans lequel ladite MBMC interagit avec une couche médiane de contrôle d'accès de ladite couche de liaison de données localisée sous ladite sous-couche spécialisée (L2/ MBMC) pour au moins l'une des opérations suivantes:
- la prise en charge au moins des problèmes de couverture et/ou d' encombrement ;
- la programmation d'au moins un type spécifique de données ; et
- une réduction du taux de données multidiffusées si nécessaire.

7. Élément de réseau (23) selon l'une des revendications précédentes, dans lequel ladite MBMC interagit avec une couche commande de diffusion/multidiffusion (L2/BMC), notamment pour un échange d'informations liées à la programmation.

8. Élément de réseau (23) selon l'une des revendications précédentes, dans lequel toute interaction de ladite sous-couche spécialisée (L2/MBMC) pour ladite MBMC avec d'autres couches de protocole (RRC, L2/RLC) est spécifiée en termes d'une primitive.

9. Élément de réseau (23) selon l'une des revendications précédentes, dans lequel ladite MBMC comprend une fonction pour les messages de programmation à transmettre.

10. Élément de réseau (23) selon l'une des revendications précédentes, dans lequel ladite MBMC comprend une fonction pour programmer toutes les sessions appartenant à un seul service MBM.

11. Élément de réseau (23) selon l'une des revendications précédentes, dans lequel ladite MBMC comprend une fonction exécutant une décision de programmation entre les différents modes de service MBMC, c'est-à-dire une multidiffusion multimédia ou une diffusion multimédia.

12. Élément de réseau (23) selon l'une des revendications précédentes, dans lequel ladite MBMC comprend une fonction pour établir des priorités entre les messages en mode multidiffusion MBMS et les messages en mode diffusion MBMS.

13. Élément de réseau (23) selon l'une des revendications précédentes, comprenant une autre sous-couche spécialisée (L2/BMC) pour un protocole de commande diffusion/multidiffusion (BMC) adaptant les services de diffusion/multidiffusion non multimédia reçus depuis ledit réseau fédérateur pour des transmissions sur ladite interface radio (Uu), dans lequel ladite MBMC comprend une fonction pour coordonner des services de diffusion/multidiffusion non-multimédia et des services multimédias par diffusion/multidiffusion.

14. Élément de réseau (23) selon l'une des revendications précédentes, dans lequel ladite MBMC comprend une fonction pour stocker des messages MBM.

15. Élément de réseau (23) selon l'une des revendications précédentes, dans lequel ladite MBMC comprend une fonction pour supprimer les données sélectionnées.

16. Élément de réseau (23) selon l'une des revendications précédentes, dans lequel ladite MBMC comprend une fonction pour prédire une quantité attendue d'un volume de trafic actuellement nécessaire pour la transmission des messages MBM, et pour demander des ressources radio appropriées pour une transmission dudit trafic via ladite interface radio (Uu), et/ou pour réaliser un contrôle de flux approprié entre ladite MBMC et une entité paire du côté du réseau fédérateur dudit réseau de téléphonie mobile.

17. Élément de réseau (23) selon l'une des revendications précédentes, dans lequel ladite MBMC comprend une fonction pour transmettre des messages MBMC, comprenant des messages MBM et des informations de programmation, via ladite interface radio (Uu) vers un équipement utilisateur (25).

18. Élément de réseau (23) selon l'une des revendications précédentes, dans lequel ladite MBMC comprend une fonction pour collecter des informations sur la quantité de données reçues par un équipement utilisateur (25) et pour transférer lesdites informations vers une entité de réseau dudit réseau de téléphonie mobile prenant en charge ledit équipement utilisateur (25) selon une quantité déterminée de données reçues.

19. Élément de réseau (23) selon l'une des revendications précédentes, dans lequel ladite MBMC comprend une fonction pour répéter une transmission.

20. Élément de réseau (23) selon l'une des revendications précédentes, dans lequel ladite MBMC comprend une fonction pour prendre en charge la soumission des données multidiffusées vers les cellules sélectionnées.

21. Élément de réseau (23) selon l'une des revendications précédentes, dans lequel ladite MBMC comprend une fonction pour identifier une session MBMS et pour initialiser une liaison vers un centre de services multimédia par diffusion et multidiffusion (MBMSC, 21) fournissant des messages MBMS, auquel MBMSC (21) est connecté ledit élément de réseau (23) via une interface (Iu-bc, Iu-ps, Iux).

22. Élément de réseau (23) selon l'une des revendications précédentes, dans lequel ledit élément de réseau (23) est un RNC (contrôleur de réseau radio) pour un UTRAN (réseau d'accès sans fil terrestre UMTS) d'un réseau UMTS (services universels de télécommunication avec les mobiles).

23. Réseau d'accès sans fil (22) pour un réseau de téléphonie mobile comprenant au moins un élément de réseau (23) selon l'une des revendications précédentes.

24. Réseau d'accès sans fil (22) selon la revendication 23, dans lequel ledit réseau d'accès sans fil (22) est un UTRAN (réseau d'accès sans fil terrestre UMTS) pour un réseau UMTS (services universels de télécommunication avec les mobiles) comprenant au moins un RNC (contrôleur de réseau radio) en tant qu'au moins un élément de réseau (23) selon l'une des revendications 1 à 22.

25. Réseau de téléphonie mobile comprenant un centre de services multimédia par diffusion et multidiffusion (MBMSC, 21) connecté via une interface (Iu-bc, Iu-ps, Iux) à au moins un élément de réseau (23) selon l'une des revendications 1 à 22.

26. Réseau de téléphonie mobile selon la revendication 25, dans lequel ledit réseau de téléphonie mobile est un réseau UMTS (services universels de télécommunication avec les mobiles), comprenant au moins un RNC (contrôleur de réseau radio) en tant qu'au moins un élément de réseau (23) selon l'une des revendications 1 à 22.

27. Réseau de téléphonie mobile selon la revendication 26, dans lequel ladite interface est l'une des interfaces Iu-ps, Iu-bc ou Iux.

28. Équipement utilisateur (25) comprenant une entité de commande multimédia par diffusion/multidiffusion permettant de prendre en charge des services multimédia par diffusion et multidiffusion reçus via une interface radio (Uu) depuis un réseau de téléphonie mobile selon l'une des revendications 25 à 27.

29. Équipement utilisateur (25) selon la revendication 28, dans lequel ladite entité de commande multimédia par diffusion/multidiffusion comprend une fonction pour délivrer des messages MBM reçus d'un service multimédia par diffusion et multidiffusion vers une couche supérieure dans ledit équipement utilisateur (25).

30. Équipement utilisateur (25) selon la revendication 28 ou 29, dans lequel ladite entité de commande multimédia par diffusion/multidiffusion comprend une fonction pour déterminer la quantité de données MBM reçues et pour transférer lesdites informations via ladite interface radio (Uu) vers ledit réseau de téléphonie mobile.

31. Système de communication basé sur un accès sans fil comprenant un réseau de téléphonie mobile selon l'une des revendications 25 à 27.

32. Système de communication basé sur un accès sans fil selon la revendication 29, comprenant au moins un équipement utilisateur (25) selon l'une des revendications 28 à 30.

33. Procédé permettant de fournir des services multimédias par diffusion et multidiffusion depuis un réseau de téléphonie mobile via une interface radio (Uu) vers un équipement utilisateur (25), lequel réseau de téléphonie mobile comprend un réseau d'accès sans fil (22) avec un élément de réseau (23), lequel élément de réseau (23) comprend des protocoles d'interface radio associés à des couches de protocoles différentes comprenant une couche de liaison de données (couche 2), **caractérisé en ce que** ledit procédé comprend l'adaptation des services multimédia par diffusion et multidiffusion issus d'un réseau fédérateur dudit réseau de téléphonie mobile, pour une transmission sur ladite interface radio (Uu) par un protocole de commande multimédia par diffusion et multidiffusion MBMC (MBMC) d'une sous-couche de commande multimédia par diffusion et multidiffusion spécialisée (L2/MBMC), laquelle sous-couche spécialisée (L2/MBMC) est une sous-couche de ladite couche de liaison de données (couche 2) dudit élément de réseau (23).
